# EUROPÄISCHE PATENTSCHRIFT

(11) **EP 1 936 274 B1**
(45) Veröffentlichungstag und Bekanntmachung des Hinweises auf die Patenterteilung: **19.10.2011**
(21) Anmeldenummer: 07021728.6
(22) Anmeldetag: 08.11.2007
(51) Int. Cl.: F23N 5/10

(54) **Fahrzeugheizgerät und Verfahren zum Starten des Betriebs eines Fahrzeugheizgeräts**
Vehicle heating device and method for starting the operation of a vehicle heating device
Appareil de chauffage pour véhicule et procédé de démarrage du fonctionnement d'un appareil de chauffage pour véhicule

(30) Priorität: 12.12.2006 DE 102006058555
(43) Veröffentlichungstag der Anmeldung: 25.06.2008
(73) Patentinhaber: J. Eberspächer GmbH & Co. KG, 73730 Esslingen (DE)
(72) Erfinder: Alber, Andreas, 70619 Suttgart (DE); Knies, Tobias, 73240 Wendlingen (DE); Barthen, Thomas, 73257 Köngen (DE); Blaschke, Walter, 73779 Deizisau (DE)
(74) Vertreter: Ruttensperger, Bernhard

(56) Entgegenhaltungen:
- EP-A- 0 349 737
- DE-A1- 19 605 216
- DE-A1- 19 924 329
- DE-C1- 19 605 324

## Beschreibung

Die vorliegende Erfindung betrifft ein Fahrzeugheizgerät, wie es beispielsweise als Standheizung oder Zuheizer eingesetzt werden kann, um durch die Verbrennung eines Brennstoff/Verbrennungsluft-Gemisches Wärme zu erzeugen. Hierzu weist ein derartiges Fahrzeugheizgerät im Allgemeinen eine mit Brennstoff und Verbrennungsluft gespeiste Brenneranordnung mit einer Brennkammer auf sowie eine Abgasführungsanordnung, in welcher die bei der Verbrennung des angesprochenen Gemisches in der Brennkammer entstehenden Verbrennungsabgase in Richtung zu einem Abgasauslass geleitet werden.

Bei derartigen Fahrzeugheizgeräten können insbesondere in der Startphase verschiedene Zustände auftreten, und zwar abhängig davon, ob ein Fahrzeugheizgerät bereits über längere Zeit hinweg nicht mehr betrieben worden ist, also dieses bzw. die damit in Zusammenhang stehenden Systemkomponenten vergleichsweise kalt sind, oder ob ggf. wiederholt mehrfach nach kurzer Ruhephase gestartet wird. Der erste Fall kann beispielsweise dann auftreten, wenn ein Fahrzeug über Nacht im Freien abgestellt war, so dass davon ausgegangen werden kann, dass alle Systemkomponenten des Fahrzeugs, insbesondere auch des Fahrzeugheizgeräts, eine im Bereich der Umgebungstemperatur liegende Temperatur aufweisen. Der zweite Fall kann beispielsweise dann auftreten, wenn ein derartiges Heizgerät als Zuheizer eingesetzt wird und bereits kurz nach dem Starten des Fahrzeugs dieses wieder abgestellt und nach kurzer Ruhepause wieder in Betrieb genommen wird.

Es ist festgestellt worden, dass dann, wenn im Bereich der Brenneranordnung, also demjenigen Bereich, in welchen auch der allgemein flüssige Brennstoff eingespeist wird, vergleichsweise hohe Temperaturen vorliegen, in der Startphase eine übermäßig starke Rauchbildung auftreten kann. Da diese Gefahr bei vergleichsweise kaltem Heizgerät geringer ist, ist es beispielsweise möglich, in einer so genannten Kaltstartphase eine größere Brennstoffmenge in die Brennkammer einzuleiten und somit die Heizleistung schneller in Richtung zu der gewünschten Leistung hoch zu fahren, als in einer Warmstartphase. Beim Start mit warmen Systemkomponenten kann zum Vermeiden der vorangehend angesprochenen Rauchbildung die Brennstoffzuführmenge gesenkt werden bzw. die Zeitdauer, über welche hinweg die Heizleistung in Richtung zu der geforderten Leistung hochgefahren wird, gestreckt werden.

DE 199 24 329 A und DE 196 05 324 C betreffen beide ein Verfahren zum Betreiben eines Fahrzeugzusatzheizgerätes, bei dem im Steuergerät eine Erfassung von Betriebsparametern erfolgt und das Steuergerät in Abhängigkeit von den Betriebsparametern bei einem Start des Fahrzeugheizgerätes eine an diese erfaßten Parameter angepaßte Startprozedur auswählt und ausführt.

Es ist das Ziel der vorliegenden Erfindung, bei einem Fahrzeugheizgerät eine zuverlässige Auswahl eines für einen jeweiligen Zustand geeigneten Startmodus treffen zu können.

Gemäß einem ersten Aspekt der vorliegenden Erfindung wird diese Aufgabe gelöst durch ein Fahrzeugheizgerät, umfassend eine mit Brennstoff und Verbrennungsluft zu speisende Brenneranordnung mit einer Brennkammer, eine Abgasführungsanordnung zum Führen von bei der Verbrennung in der Brennkammer entstehenden Abgasen zu einem Abgasauslass, eine von zu erwärmendem Medium durchströmbare Wärmetauschanordnung zur Übertragung von bei der Verbrennung entstehender Wärme auf das Medium, eine erste Temperatursensoranordnung im Bereich der Abgasführungsanordnung zur Erfassung einer mit der Temperatur im Bereich der Abgasführungsanordnung in Zusammenhang stehenden ersten Temperaturgröße, eine zweite Temperatursensoranordnung zur Erfassung einer mit der Temperatur im Bereich der Wärmetauscheranordnung in Zusammenhang stehenden zweiten Temperaturgröße, eine Ansteuervorrichtung, welche das Fahrzeugheizgerät unter Berücksichtigung der ersten Temperaturgröße und der zweiten Temperaturgröße ansteuert, wobei die Ansteuervorrichtung dazu ausgebildet ist, in einer Startphase das Fahrzeugheizgerät nur dann mit einem ersten Startmodus zu starten, wenn die erste Temperaturgröße nicht über einer ihr zugeordneten ersten Temperaturschwelle liegt und die zweite Temperaturgröße nicht über einer ihr zugeordneten zweiten Temperaturschwelle liegt, und ansonsten das Fahrzeugheizgerät mit einem anderen Startmodus startet, wobei die Heizleistung des Fahrzeugheizgeräts im ersten Startmodus schneller erhöht wird, als in einem anderen Startmodus.

Bei dem erfindungsgemäßen Fahrzeugheizgerät wird also unter Berücksichtigung der beiden Temperaturgrößen entschieden, welcher Startmodus herangezogen wird. Dann, wenn beide Temperaturgrößen unter jeweils zugeordneten Schwellenwerten liegen, kann zuverlässig darauf geschlossen werden, dass das Gesamtsystem auch tatsächlich in einem vergleichsweise kalten Zustand ist und insofern ein Startmodus gewählt werden kann, mit welchem ohne die Gefahr der Raucherzeugung die Heizleistung vergleichsweise schnell angehoben werden kann. Deutet jedoch zumindest eine der Temperaturgrößen darauf hin, dass in dem zugeordneten Systembereich noch eine über der zugeordneten Schwelle liegende Temperatur vorhanden ist, so kann ein Startmodus gewählt werden, bei welchem vorrangig auf das Vermeiden einer übermäßigen Schadstoffbelastung geachtet wird, und zwar dadurch, dass die Heizleistung langsamer angehoben wird, was bedeutet, dass auch weniger Brennstoff eingespeist wird bzw. die Brennstoffeinspeisungsrate langsamer erhöht wird. Durch das Berücksichtigen der beiden Temperaturgrößen kann trotz der Tatsache, dass keine der Temperatursensoranordnungen eine Temperatur unmittelbar im Bereich der Brennkammer erfasst, ein zuverlässiger Rückschluss auf die thermischen Bedingungen im Bereich der Brennkammer erhalten werden.

Beispielsweise kann vorgesehen sein, dass die Abgasführungsanordnung ein an die Brennkammer anschließendes Flammrohr umfasst und dass die erste Temperatursensoranordnung eine mit der Temperatur im Bereich des Flammrohrs im Zusammenhang stehende erste Temperaturgröße erfasst. Weiterhin ist es möglich, dass die Wärmetauscheranordnung einen Mediumströmungsraum umfasst, und dass die zweite Temperatursensoranordnung eine mit der Temperatur im Bereich des Mediumströmungsraums in Zusammenhang stehende zweite Temperaturgröße erfasst.

Aufgrund der vergleichsweise starken thermischen Wechselwirkung mit einem flüssigen Medium ist es besonders vorteilhaft, wenn das zu erwärmende Medium in einem im Wesentlichen geschlossenen Kreislauf zirkulierende Flüssigkeit umfasst.

Gemäß einem weiteren Aspekt der Erfindung wird die eingangs genannte Aufgabe gelöst durch ein Verfahren zum Starten des Betriebs eines Fahrzeugheizgerätes, wobei das Fahrzeugheizgerät eine mit Brennstoff und Verbrennungsluft zu speisende Brenneranordnung mit einer Brennkammer, eine Abgasführungsanordnung zum Führen von bei der Verbrennung in der Brennkammer entstehenden Abgasen zu einem Abgasauslass, eine von zu erwärmendem Medium durchströmbare Wärmetauschanordnung zur Übertragung von bei der Verbrennung entstehender Wärme auf das Medium, eine erste Temperatursensoranordnung im Bereich der Abgasführungsanordnung zur Erfassung einer mit der Temperatur im Bereich der Abgasführungsanordnung in Zusammenhang stehenden ersten Temperaturgröße sowie eine zweite Temperatursensorordnung zur Erfassung einer mit der Temperatur im Bereich der Wärmetauscheranordnung in Zusammenhang stehenden zweiten Temperaturgröße umfasst, wobei das Verfahren die Maßnahmen umfasst:
a) Vergleichen der ersten Temperaturgröße mit einer ihr zugeordneten ersten Temperaturschwelle,
b) Vergleichen der zweiten Temperaturgröße mit einer ihr zugeordneten zweiten Temperaturschwelle,
c) dann, wenn die erste Temperaturgröße nicht über der ersten Temperaturschwelle liegt und die zweite Temperaturgröße nicht über der zweiten Temperaturschwelle liegt, Starten des Fahrzeugheizgeräts mit einem ersten Startmodus und ansonsten Starten des Fahrzeugheizgeräts mit einem anderen Startmodus, wobei im ersten Startmodus die Heizleistung des Fahrzeugheizgeräts schneller erhöht wird, als bei jedem anderen Startmodus.

Um bei dieser Vorgehensweise den Ansteueraufwand möglichst gering zu halten, wird vorgeschlagen, dass dann, wenn die erste Temperaturgröße über der ersten Temperaturschwelle liegt oder/und die zweite Temperaturgröße über der zweiten Temperaturschwelle liegt, das Fahrzeugheizgerät in einem zweiten Startmodus gestartet wird. Dies bedeutet, dass grundsätzlich in der Ansteuervorrichtung nur zwei verschiedene Ansteuerroutinen für zwei verschiedene Startmodi hinterlegt werden müssen, zwischen welchen dann temperaturabhängig gewählt werden kann.

Die vorliegende Erfindung wird nachfolgend mit Bezug auf die beiliegenden Zeichnungen detailliert beschrieben. Es zeigt:
- Fig. 1: eine Prinzipansicht eines Fahrzeugheizgeräts;
- Fig. 2: ein Diagramm, welches die temperaturabhängige Auswahl verschiedener Startmodi veranschaulicht;
- Fig. 3: die Entwicklung der Heizleistung bei verschiedenen Startmodi, aufgetragen über der Zeit.

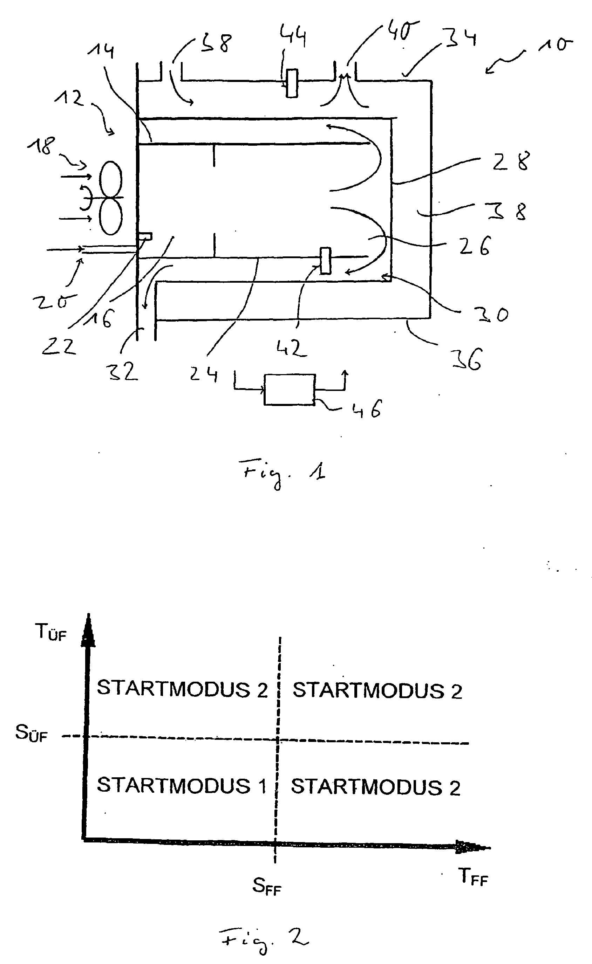

In Fig. 1 ist ein Fahrzeugheizgerät allgemein mit 10 bezeichnet. Das Heizgerät 10 umfasst eine Brenneranordnung 12 mit einer in einem Brennkammergehäuse 14 gebildeten Brennkammer 16. In die Brennkammer 16 wird vermittels eines Verbrennungsluftgebläses 18 Verbrennungsluft gefördert, und wird vermittels an einer schematisch angedeuteten Brennstoffzuführanordnung 20 im Allgemeinen flüssiger Brennstoff eingespeist. In der Brennkammer 16 wird durch Verdampfung oder Zerstäubung des zunächst flüssigen Brennstoffs ein zündfähiges bzw. verbrennungsfähiges Gemisch erzeugt, wobei zum Zünden dieses Gemisches zumindest am Anfang einer Startphase ein Zündorgan 22, beispielsweise Glühstift, erregt wird.

An die Brennkammer 16 anschließend ist ein Flammrohr 24 vorgesehen, entlang welchem die bei der Verbrennung in der Brennkammer 16 entstehenden Verbrennungsabgase strömen. An einem in Strömungsrichtung offenen Ende 26 des Flammrohrs 24 treten die Verbrennungsabgase aus diesem aus und werden von einem das Flammrohr 24 und auch das Brennkammergehäuse 14 zumindest teilweise umgebenden inneren Wärmetauschergehäuse 28 umgelenkt. Das Flammrohr 24 bildet zusammen mit dem inneren Wärmetauscherghäuse 28 eine Verbrennungsabgasführungsanordnung 30, über welche die Verbrennungsabgase zu einem Abgasauslass 32 geführt werden.

Eine Wärmetauscheranordnung 34 umfasst das bereits angesprochene innere Wärmetauschergehäuse 28 und ein dieses umgebendes, ebenfalls im Wesentlichen topfartiges äußeres Wärmetauschergehäuse 36. Zwischen diesen beiden Gehäusen 28 und 36 ist ein Mediumströmungsraum 38 gebildet, in welchen ein zu erwärmendes Medium über einen Einlass 38 einströmt. An einem Auslass 40 kann das Medium aus dem Mediumströmungsraum 38 wieder austreten.

Bei ablaufender Verbrennung übertragen die auch entlang der Innenoberfläche des inneren Wärmetauschergehäuses 28 strömenden Verbrennungsabgase Wärme auf das im Mediumströmungsraum 38 strömende Medium, so dass dieses erwärmt am Auslass 40 austritt. Das in Frage stehende Medium kann beispielsweise eine Flüssigkeit, wie z. B. Wasser, sein, das in einem geschlossenen Kreislauf zirkuliert, wobei dieser Kreislauf beispielsweise auch den Kühlmittelkreislauf einer Brennkraftmaschine umfassen kann. Dieses flüssige Medium kann dann die darin transportierte Wärme in einem weiteren Wärmetauscher auf die in einen Fahrzeuginnenraum einzuleitende Luft übertragen. Grundsätzlich kann die vorliegende Erfindung aber auch Anwendung finden bei einem Heizgerät, das als zu erwärmendes Medium Luft durch den Mediumströmungsraum 38 fördert.

Nahe dem offenen Ende 26 des Flammrohrs 24 ist eine erste Temperatursensoranordnung 42 vorgesehen. Diese kann einen Temperaturfühler umfassen, der die Temperatur in dem ihn umgebenden Bereich, insbesondere also im Bereich des Flammrohrs 24, erfassen kann. Eine zweite Temperatursensoranordnung 44 kann ebenfalls einen Temperatursensor umfassen, der die Temperatur des im Mediumströmungsraum 38 strömenden Mediums beispielsweise nahe dem Auslass 40 erfassen kann.

Eine Ansteuervorrichtung 46 dient dazu, den Betrieb des Fahrzeugheizgeräts 10 auf der Grundlage verschiedener ihr zugeführter oder darin abgespeicherter Parameter zu steuern bzw. regeln. So kann die Ansteuervorrichtung 46 als derartige Parameter bzw. Eingangsgrößen die von den Sensoranordnungen 42, 44 gelieferten Signale empfangen. Beruhend auf diesen und ggf. weiteren Informationen steuert die Ansteuervorrichtung 46 dann das Verbrennungsluftgebläse 18, die Brennstoffzuführanordnung 20 und ggf. auch das Zündorgan 22 an. Auch eine Pumpe, mit welcher das Medium durch den Mediumströmungsraum 38 hindurch gefördert wird, kann unter der Ansteuerung der Ansteuervorrichtung 46 stehen.

Es sei darauf hingewiesen, dass die vorangehend mit Bezug auf die Fig. 1 beschriebene Ausgestaltung eines Fahrzeugheizgeräts 10 nur beispielhaft ist und an verschiedenen Bereichen Variationen möglich sind, ohne dabei von den Prinzipien der nachfolgend beschriebenen Erfindung abzuweichen.

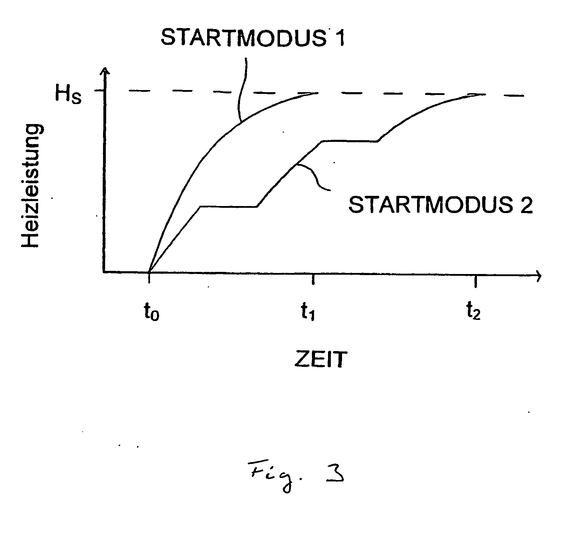

Soll ein derartiges Fahrzeugheizgerät 10 in Betrieb gesetzt werden, so wird zunächst auf der Grundlage der durch die Temperatursensoranordnungen 42 und 44 gelieferten Signale entschieden, in welchem Startmodus das Fahrzeugheizgerät 10 betrieben wird. Hierzu ist beispielsweise in einem Speicher in der Ansteuervorrichtung 46 in Zuordnung zu jedem der durch die Sensoraordnungen 42, 44 gelieferten Temperaturwerte eine Temperaturschwelle vorgesehen. In Zuordnung zu der auch als Flammfühler bezeichenbaren Temperatursensoranordnung 42, die also ein Temperatursignal T_{FF} liefert, ist eine erste Temperaturschwelle S_{FF} vorgesehen. In entsprechender Weise ist in Zuordnung zu der auch als Überhitzungsfühler bezeichenbaren Temperatursensoranordnung 44, die ein Temperatursignal T_{ÜF} liefert, eine zweite Temperaturschwelle S_{ÜF} vorgesehen. Vor Starten des Verbrennungsbetriebs vergleicht die Ansteuervorrichtung 46 also die gelieferten Signale bzw. die möglicherweise daraus generierten Temperaturwerte mit den jeweils zugeordneten Schwellen S_{FF} und S_{ÜF}. Führt dieser Vergleich dazu, dass keiner der beiden gelieferten Temperaturwerte bzw. keines der Signale über dem zugeordneten Schwellenwert liegt, so wird, wie in Fig. 2 veranschaulicht, ein erster Startmodus "Startmodus 1" für den Betrieb des Fahrzeugheizgeräts 10 gewählt. Liegt zumindest einer der Temperaturwerte bzw. die entsprechende Größe über dem zugeordneten Schwellenwert, so wird ein zweiter Startmodus "Startmodus 2" gewählt. Die beiden Startmodi unterscheiden sich, wie die Fig. 3 verdeutlicht, darin, wie schnell die Heizleistung in Richtung zu einer jeweiligen Soll-Heizleistung Hₛ hochgefahren wird. Im "Startmodus 1" wird dann, wenn beispielsweise zum Zeitpunkt t₀ ein Startsignal erzeugt wird, durch Einspeisung einer vergleichsweise großen Brennstoffmenge und einer entsprechend großen Verbrennungsluftmenge die Heizleistung sehr schnell angehoben. Im "Startmodus 2" wird die Heizleistung deutlich langsamer angehoben, beispielsweise durch geringere Brennstoffzufuhr und Verbrennungsluftzufuhr bzw. geringere Erhöhung der Zufuhrrate und ggf. auch durch das Vorsehen von einem oder mehreren Plateaus, bei dem innerhalb einer vorbestimmten Zeitdauer überhaupt keine Änderung der Brennstoffzuführmenge bzw. der Verbrennungsluftzuführmenge erfolgt. Es sei auch hier darauf hingewiesen, dass die beiden in Fig. 3 veranschaulichten Startmodi nur beispielhaft stehen für eine Vielzahl verschiedener Möglichkeiten zum Erhöhen der Heizleistung. Von Bedeutung ist, dass bei Auswahl des "Startmodus 2" die Heizleistung rampenartig oder/und stufenartig zumindest zeitweise langsamer angehoben wird, als bei Auswahl des "Startmodus 1".

Durch diese Diskriminierung der beiden Startmodi und die Auswahl des "Startmodus 1" nur dann, wenn beide Temperatursignale auf vergleichsweise niedrige Temperaturen hindeuten, wird einerseits dafür gesorgt, dass in diesem Zustand die Heizleistung möglichst schnell angehoben werden kann und somit möglichst schnell die gewünschte Erwärmung erfolgen kann. Andererseits ist dabei sichergestellt, dass nicht durch übermäßig hohe Temperaturen im Bereich der Brenneranordnung 12 bei beginnender Brennstoffeinleitung eine zu starke Rauchentwicklung mit dementsprechend ungewünschtem Abgasenthalt generiert wird. Dies ist nämlich dann der Fall, wenn der Betrieb bei vergleichsweise hohen Temperaturen im Bereich der Brennkammer mit einer zu großen Brennstoffmenge gestartet wird. Da jedoch dann, wenn zumindest eines der Temperatursignale darauf hindeutet, dass im Bereich der Brennkammer 16 noch etwas höhere Temperaturen vorherrschen, immer der "Startmodus 2" gewählt wird, mithin also die Heizleistung nur langsamer angehoben wird bzw. von Beginn an eine geringere Brennstoffzuführmenge verwendet wird, kann diese übermäßige Rauchbildung in der Startphase zuverlässig vermieden werden.

Durch die Verknüpfung zweier Temperatursignale kann sichergestellt werden, dass die vorangehend beschriebene Auswahl auch zuverlässig getroffen werden kann, ohne dass unmittelbar im Bereich der Brennkammer 16 selbst die Temperatur gemessen wird. Auf diese Art und Weise kann es vermieden werden, in der Brennkammer 16, also dort wo sehr hohe Temperaturen vorherrschen, selbst die Temperatur messen zu müssen, was eine entsprechend hohe Belastung eines Sensors zur Folge hätte.

Es sei darauf hingewiesen, dass selbstverständlich auch hinsichtlich der vorangehend beschriebenen Vorgehensweise bzw. den hierfür vorgesehenen konstruktiven Maßnahmen Variationen erfolgen können. So kann selbstverständlich die Temperatursensoranordnung 44 die Temperatur beispielsweise näher im Bereich des Mediumeinlasses 38 erfassen, oder die Temperatursensoranordnung 44 kann auch mehrere Sensoren umfassen, die an verschiedenen Positionen die Temperatur erfassen und deren Signal dann gemeinsam ausgewertet wird. Auch die Temperatursensoranordnung 42 könnte an anderer Stelle positioniert sein und beispielsweise in Strömungsrichtung der Verbrennungsabgase die Temperatur weiter stromaufwärts oder stromabwärts erfassen. Auch ist es selbstverständlich möglich, in denjenigen Phasen bzw. Zuständen, in welchen im Diagramm der Fig. 2 nicht der Startmodus 1 gewählt wird, beispielsweise dahingehend noch zu diskriminieren, welcher der Temperaturwerte über der ihm zugeordneten Schwelle liegt, so dass hier durchaus auch unterschiedliche Startmodi den "Startmodus 2" ersetzen können.

## Patentansprüche

1. Fahrzeugheizgerät, umfassend:
- eine mit Brennstoff und Verbrennungsluft zu speisende Brenneranordnung (12) mit einer Brennkammer (16),
- eine Abgasführungsanordnung (30) zum Führen von bei der Verbrennung in der Brennkammer (16) entstehenden Abgasen zu einem Abgasauslass (32),
- eine von zu erwärmendem Medium durchströmbare Wärmetauschanordnung (34) zur Übertragung von bei der Verbrennung entstehender Wärme auf das Medium,
- eine erste Temperatursensoranordnung (42) im Bereich der Abgasführungsanordnung (30) zur Erfassung einer mit der Temperatur im Bereich der Abgasführungsanordnung (30) in Zusammenhang stehenden ersten Temperaturgröße (T_{FF}),
- eine zweite Temperatursensoranordnung (44) zur Erfassung einer mit der Temperatur im Bereich der Wärmetauscheranordnung (34) in Zusammenhang stehenden zweiten Temperaturgröße (T_{ÜF}).
- eine Ansteuervorrichtung (46), welche das Fahrzeugheizgerät (10) unter Berücksichtigung der ersten Temperaturgröße (T_{FF}) und der zweiten Temperaturgröße (T_{ÜF}) ansteuert, wobei die Ansteuervorrichtung (46) dazu ausgebildet ist, in einer Startphase das Fahrzeugheizgerät (10) nur dann mit einem ersten Startmodus zu starten, wenn die erste Temperaturgröße (T_{FF}) nicht über einer ihr zugeordneten ersten Temperaturschwelle (S_{FF}) liegt und die zweite Temperaturgröße (T_{ÜF}) nicht über einer ihr zugeordneten zweiten Temperaturschwelle (S_{ÜF}) liegt, und ansonsten das Fahrzeugheizgerät (10) mit einem anderen Startmodus startet, wobei die Heizleistung des Fahrzeugheizgeräts (10) im ersten Startmodus schneller erhöht wird, als in einem anderen Startmodus.

2. Fahrzeugheizgerät nach Anspruch 1,
**dadurch gekennzeichnet, dass** die Abgasführungsanordnung (30) ein an die Brennkammer (16) anschließendes Flammrohr (24) umfasst, und dass die erste Temperatursensoranordnung (42) eine mit der Temperatur im Bereich des Flammrohrs (24) im Zusammenhang stehende erste Temperaturgröße (T_{FF}) erfasst.

3. Fahrzeugheizgerät nach Anspruch 1 oder 2,
**dadurch gekennzeichnet, dass** die Wärmetauscheranordnung (34) einen Mediumströmungsraum (38) umfasst, und dass die zweite Temperatursensoranordnung eine mit der Temperatur im Bereich des Mediumströmungsraums (38) in Zusammenhang stehende zweite Temperaturgröße (T_{ÜF}) erfasst.

4. Fahrzeugheizgerät nach einem der Ansprüche 1 bis 3,
**dadurch gekennzeichnet, dass** das zu erwärmende Medium in einem im Wesentlichen geschlossenen Kreislauf zirkulierende Flüssigkeit umfasst.

5. Verfahren zum Starten des Betriebs eines Fahrzeugheizgerätes, wobei das Fahrzeugheizgerät umfasst:
- eine mit Brennstoff und Verbrennungsluft zu speisende Brenneranordnung (12) mit einer Brennkammer (16),
- eine Abgasführungsanordnung (30) zum Führen von bei der Verbrennung in der Brennkammer (16) entstehenden Abgasen zu einem Abgasauslass (32),
- eine von zu erwärmendem Medium durchströmbare Wärmetauschanordnung (34) zur Übertragung von bei der Verbrennung entstehender Wärme auf das Medium,
- eine erste Temperatursensoranordnung (42) im Bereich der Abgasführungsanordnung (30) zur Erfassung einer mit der Temperatur im Bereich der Abgasführungsanordnung (30) in Zusammenhang stehenden ersten Temperaturgröße (T_{FF}),
- eine zweite Temperatursensoranordnung (44) zur Erfassung einer mit der Temperatur im Bereich der Wärmetauscheranordnung (34) in Zusammenhang stehenden zweiten Temperaturgröße (T_{ÜF}),
wobei das Verfahren die Maßnahmen umfasst:
a) Vergleichen der ersten Temperaturgröße (T_{FF}) mit einer ihr zugeordneten ersten Temperaturschwelle (S_{FF}),
b) Vergleichen der zweiten Temperaturgröße (T_{ÜF}) mit einer ihr zugeordneten zweiten Temperaturschwelle (S_{ÜF}),
c) dann, wenn die erste Temperaturgröße (T_{FF}) nicht über der ersten Temperaturschwelle (S_{FF}) liegt und die zweite Temperaturgröße (T_{ÜF}) nicht über der zweiten Temperaturschwelle (S_{ÜF}) liegt, Starten des Fahrzeugheizgeräts (10) mit einem ersten Startmodus und ansonsten Starten des Fahrzeugheizgeräts (10) mit einem anderen Startmodus, wobei im ersten Startmodus die Heizleistung des Fahrzeugheizgeräts (10) schneller erhöht wird, als bei jedem anderen Startmodus.

6. Verfahren nach Anspruch 5,
**dadurch gekennzeichnet, dass** dann, wenn die erste Temperaturgröße über der ersten Temperaturschwelle liegt oder/und die zweite Temperaturgröße über der zweiten Temperaturschwelle liegt, das Fahrzeugheizgerät in einem zweiten Startmodus gestartet wird.

## Claims

1. Vehicle heating device, comprising:
- a burner arrangement (12) to be fed with fuel and combustion air and having a combustion chamber (16),
- an exhaust gas guiding arrangement (30) for guiding exhaust gas produced during combustion in the combustion chamber (16) to an exhaust gas outlet (32),
- a heat exchanger arrangement (34) wherein a medium to be heated may flow for transferring heat produced during combustion to the medium,
- a first temperature sensor arrangement (42) in the area of the exhaust gas guiding arrangement (30) for detecting a first temperature variable (T_{FF}) in relation to the temperature in the area of the exhaust gas guiding arrangement (30),
- a second temperature sensor arrangement (44) for detecting a second temperature variable (T_{UF}) in relation to the temperature in the area of the heat exchanger arrangement (34),
- an actuation device (46) driving the vehicle heating device (10) taking into account the first temperature variable (T_{FF}) and the second temperature variable (T_{ÜF}), the actuation device (46) being adapted for in a starting phase of the vehicle heating device (10) starting in a first starting mode only if the first temperature variable (T_{FF}) does not exceed a first associated temperature threshold (S_{FF}) and the second temperature variable (T_{ÜF}) does not exceed a second associated temperature threshold (S_{ÜF}), and otherwise starting the vehicle heating device (10) in another starting mode, the heating power of the vehicle heating device (10) being more rapidly increased in the first starting mode than in another starting mode.

2. Vehicle heating device according to claim 1,
**characterized by** the exhaust gas guiding arrangement (30) comprising a flame tube (24) attached to the combustion chamber (16) and by the first temperature sensor arrangement (42) detecting a first temperature variable (T_{FF}) associated to the temperature in the area of the flame tube (24).

3. Vehicle heating device according to claim 1 or 2,
**characterized by** the heat exchanger arrangement (34) comprising a medium flow space (38) and by the second temperature sensor arrangement detecting a second temperature variable (T_{ÜF}) associated to the temperature in the area of the medium flow space (38).

4. Vehicle heating device according to one of claims 1 to 3,
**characterized by** the medium to be heated comprising fluid circulating in a circuit which is substantially closed.

5. Method of starting the operation of a vehicle heating device, the vehicle heating device comprising:
- a burner arrangement (12) to be fed with fuel and combustion air and having a combustion chamber (16),
- an exhaust gas guiding arrangement (30) for guiding exhaust gas produced during combustion in the combustion chamber (16) to an exhaust gas outlet (32),
- a heat exchanger arrangement (34), wherein a medium to be heated may flow for transferring heat produced during combustion to the medium,
- a first temperature sensor arrangement (42) in the area of the exhaust gas guiding arrangement (30) for detecting a first temperature variable (T_{FF}) in relation to the temperature in the area of the exhaust gas guiding arrangement (30),
- a second temperature sensor arrangement (44) for detecting a second temperature variable (T_{ÜF}) in relation to the temperature in the area of the heat exchanger arrangement (34),
the procedure comprising the following measures:
a) comparing the first temperature variable (T_{FF}) to an associated first temperature threshold (S_{FF}),
b) comparing the second temperature variable (T_{ÜF}) to an associated second temperature threshold (S_{ÜF}),
c) if the first temperature variable (T_{FF}) does not exceed the first temperature threshold (S_{FF}) and the second temperature variable (T_{ÜF}) does not exceed the second temperature threshold (S_{ÜF}) starting the vehicle heating device (10) in a first starting mode, otherwise starting the vehicle heating device (10) in another starting mode, the heating power of the vehicle heating device (10) being increased more rapidly in the first starting mode than in any other starting mode.

6. Method according to claim 5,
**characterized in that** if the first temperature variable exceeds the first temperature threshold or/and the second temperature variable exceeds the second temperature threshold the vehicle heating device is started in a second starting mode.

## Revendications

1. Dispositif de chauffage pour un véhicule, comprenant:
- an arrangement de brûleur (12) à alimenter avec du combustible et de l'air de combustion et ayant une chambre de combustion (16),
- un arrangement de guidage des gaz d'échappement (30) pour guider les gaz d'échappement produits lors de la combustion dans la chambre de combustion (16) à une sortie de gaz d'échappement (32),
- un arrangement d'échangeur de chaleur (34) à travers lequel le médium à chauffer peut circuler pour transférer au médium la chaleur produite par la combustion,
- un premier arrangement de capteurs de température (42) dans la région de l'arrangement de guidage des gaz d'échappement (30) pour détecter une première variable de température (T_{FF}) associée à la température dans la région de l'arrangement de guidage des gaz d'échappement (30)
- un deuxième arrangement de capteurs de température (44) pour détecter une deuxième variable de température (T_{ÜF}) associée à la température dans la région de l'échangeur de chaleur (34),
- un dispositif de commande (46) activant le dispositif de chauffage pour un véhicule (10) tenant compte de la première variable de température (T_{FF}) et de la deuxième variable de température (T_{ÜF}), le dispositif ce commande (46) étant adapté pour initier un premier mode de démarrage dans la phase de démarrage du dispositif de chauffage pour un véhicule (10) seulement si la première variable de température (T_{FF}) ne dépasse pas un premier seuil de température (S_{FF}) associé et si la deuxième variable de température (T_{ÜF}) ne dépasse pas un deuxième seuil de température (S_{ÜF}) associé, et pour autrement activer le dispositif de chauffage pour un véhicule (10) dans un autre mode de démarrage, la performance du dispositif de chauffage pour un véhicule (10) étant accélérée plus vite dans le premier mode de démarrage que dans les autres modes de démarrage.

2. Dispositif de chauffage pour un véhicule selon la revendication 1,
**caractérisé par** l'arrangement de guidage des gaz d'échappement (30) comprenant un tube de flamme (24) connecté à la chambre de combustible (16) et par le premier arrangement de capteurs de température (42) déterminant une première variable de température (T_{FF}) associée à la température dans la région du tube de flamme (24).

3. Dispositif de chauffage pour un véhicule selon la revendication 1 ou 2,
**caractérisé par** l'arrangement d'échangeur de chaleur (34) comprenant un espace de circulation du médium (38), et par le deuxième arrangement de capteur de température déterminant une deuxième variable de température (T_{ÜF}) associée à la température dans la région de l'espace de circulation du médium (38).

4. Dispositif de chauffage pour un véhicule selon une des revendications 1 à 3,
**caractérisé par** le médium à chauffer comprenant un fluide circulant substantiellement dans un circuit fermé.

5. Méthode pour démarrer l'opération d'un dispositif de chauffage pour un véhicule, le dispositif de chauffage pour un véhicule comprenant :
- un arrangement de brûleur (12) à alimenter avec du combustible et de l'air de combustion et ayant chambre de combustion (16),
- un arrangement de guidage des gaz d'échappement (30) pour guider les gaz d'échappement produits lors de la combustion dans la chambre de combustion (16) à une sortie de gaz d'échappement (32),
- un arrangement d'échangeur de chaleur (34) à travers lequel le médium à chauffer peut circuler pour transférer au médium la chaleur produite par la combustion,
- un premier arrangement de capteurs de température (42) dans la région de l'arrangement de guidage des gaz d'échappement (30) pour détecter une première variable de température (T_{FF}) associée à la température dans la région de l'arrangement de guidage des gaz d'échappement (30)
- un deuxième arrangement de capteurs de température (44) pour détecter une deuxième variable de température (T_{ÜF}) associée à la température dans la région de l'échangeur de chaleur (34),
la méthode comprenant les mesures suivantes :
a) comparer une première variable de température (T_{FF}) à un premier seuil de température associé (S_{FF}),
b) comparer la deuxième variable de température (T_{ÜF}) à un deuxième seuil de température associé (S_{ÜF}),
c) si la première variable de température (T_{FF}) ne dépasse pas le premier seuil de température (S_{FF}) et si la deuxième variable de température (T_{ÜF}) ne dépasse pas le deuxième seuil de température (S_{ÜF}) démarrer le dispositif de chauffage pour un véhicule (10) dans un premier mode de démarrage et autrement démarrer le dispositif de chauffage pour un véhicule (10) dans un autre mode de démarrage, la performance de chauffage du dispositif de chauffage pour un véhicule (10) étant augmentée plus vite dans le premier mode de démarrage que dans tout autre mode de démarrage.

6. Méthode selon la revendication 5,
**caractérisée par** le dispositif de chauffage pour un véhicule étant démarré dans un deuxième mode de démarrage si la première variable de température dépasse le premier seuil de température ou/et si la deuxième variable de température dépasse le deuxième seuil de température.
